# EUROPEAN PATENT SPECIFICATION

(11) **EP 1 944 121 B1**
(45) Date of publication and mention of the grant of the patent: **01.08.2012**
(21) Application number: 06714189.5
(22) Date of filing: 21.02.2006
(51) Int. Cl.: B25B 5/06, B25B 5/16

(54) **SWING-TYPE CLAMP DEVICE**
SCHWENKSPANNVORRICHTUNG
DISPOSITIF DE SERRAGE DE TYPE A BALANCEMENT

(30) Priority: 14.10.2005 WO PCT/JP2005/018946
(43) Date of publication of application: 16.07.2008
(73) Proprietor: Pascal Engineering Corporation, Itami-shi Hyogo 664-8502 (JP)
(72) Inventor: KURODA, Takayuki, c/o PASCAL ENGINEERING CORPORATION, Itami-shi, Hyogo 664-8502 (JP)
(74) Representative: Roberts, Mark Peter
(86) International application number: PCT/JP2006/303049
(87) International publication number: WO 2007/043197

(56) References cited:
- EP-A- 0 841 124
- EP-A- 1 264 659
- DE-A1- 4 139 317
- DE-A1- 4 430 457
- JP-A- 08 229 835
- JP-A- 09 070 728
- JP-A- 09 183 035
- JP-A- 2004 223 640
- JP-A- 2005 028 535
- US-A- 5 192 063

## Description

The present invention relates to a swing clamp apparatus in which the clamp arm is reciprocated and swung.

Conventionally, the swing clamp apparatus comprises a clamp body, a clamp rod, a clamp arm, and a drive mechanism. The clamp rod is inserted in and supported by the clamp body reciprocally in the axial direction and rotatably about the axis. The clamp arm is fixed to the leading end of the clamp rod. The drive mechanism is provided in the clamp body to reciprocate and rotate the clamp rod so as to switch the clamp arm between an unclamping position and a clamping position where the clamp arm is retracted in the axial direction and swung about the axis in relation to the unclamping position.

In the above swing clamp apparatus, the clamp arm may be replaced with different ones in size or shape when a clamping object is changed. Usually the clamp arm is directly fixed to the clamp rod by bolts. For example, in the clamp apparatus of Patent Document 1, the clamp arm has an axial bore in which the leading end of the clamp rod is inserted and a slit continued from the axial bore. A bolt is inserted in the clamp arm through the slit so that the bolt fastens and directly secures the clamp arm to the clamp rod.

The clamp arm reciprocates and swings in the swing clamp apparatus. Therefore, the clamp arm has to be positioned and fixed to the clamp rod at a desired position for reliably clamping and unclamping a clamping object.
Patent Document 1: US Patent No. 5192063 Publication
A clamp apparatus according to the preamble of claim 1 is disclosed in DE 44 30 457 A1.

The prior art swing clamp apparatus basically does not have a function to position the clamp arm on the clamp rod. Therefore, for replacing the clamp arm, a heavy workload is required for positioning and fixing the clamp arm to the clamp rod at a desired position. If the clamp arm is frequently replaced when the clamping object is changed, it is significantly inconvenient to execute a heavy workload of positioning and fixing the clamp arm to the clamp rod.

The clamp apparatus of Patent Document 1 directly attaches the clamp arm to the clamp rod and has a function to position the clamp arm on the clamp rod in the axial direction but no function to position it in the rotative direction about the axis. Therefore, the same problem as the above occurs.
The aim purpose of the present invention is to provide a swing clamp apparatus in which the clamp arm is positioned and fixed to the clamp rod at a desired position in a simple and reliable manner and the clamp arm replacement workload is certainly reduced.

The swing clamp apparatus of a first aspect of the present invention is a swing clamp apparatus according to claim 1.

The swing clamp apparatus of a second aspect of the present invention is a swing clamp apparatus according to claim 7.

The swing clamp apparatus of the first aspect particularly comprises an attachment block fixed to the leading end of the clamp rod and to which the clamp arm is detachably attached and at least one clamping force transmission pin inserted in the attachment block and clamp arm in the direction parallel to the orthogonal direction to the axis for coupling the positioned clamp arm to the attachment block in an integrated manner. Therefore, in replacing the clamp arm, first, the clamping force transmission pin is removed from the attachment block and clamp arm to decouple the attachment block and clamp arm. Then, the clamp arm is removed from the attachment block, and a new clamp arm is mounted on the attachment block. The clamping force transmission pin is inserted in the attachment block and clamp arm in the direction parallel to the orthogonal direction to the axis to couple the positioned clamp arm to the attachment block in an integrated manner. In other words, the attachment block is pre-positioned and fixed to the clamp rod at a desired position; then, the clamp arm may be positioned and attached to the clamp rod (attachment block) in a simple and reliable manner. The clamp arm may simply be attached to the attachment block by the clamping force transmission pin without fastening it, reducing the clamp arm replacement workload. Particularly, it is significantly convenient that the clamp arm replacement workload is remarkably reduced where the clamp arm is frequently replaced.

According to the swing clamp apparatus of claim 2, the attachment block has a positioner for positioning the clamp arm in the axial direction and in the rotative direction about the axis. Therefore, the clamp arm may be positioned at a coupling point in a simple and reliable manner by mounting the clamp arm on the attachment block. In this state, the clamping force transmission pin is easily inserted in the attachment block and clamp arm and consequently the clamp arm replacement may be done in a simpler and more reliable manner.

According to the swing clamp apparatus of claim 3, the clamp arm is fitted on the attachment block, reliably inserting the clamping force transmission pin in the attachment block and clamp arm in the direction parallel to the orthogonal direction to the axis, by which the clamping force transmission pin reliably integrally couples the positioned clamp arm to the attachment block.

According to the swing clamp apparatus of claim 4, the attachment block is formed as a rectangular block and the clamp arm has a rectangular bore in which the attachment block is fitted. In other words, the clamp arm fitted on the attachment block has the same advantage as claim 3 and the clamp arm is reliably positioned on the attachment block in the rotative direction about the axis using a simple structure.

According to the swing clamp apparatus of claim 5, the clamp rod has at the leading end a tapered shaft part having a diameter deceased toward the tip and the attachment block has a tapered axial bore in which the tapered shaft part is fitted. Therefore, pushed in the retracting direction, the attachment block can reliably be pressed against and secured to the leading end of the clamp rod.

According to the swing clamp apparatus of claim 6, the attachment block has a axial bore in which the leading end of the clamp rod is fitted and a separator continued from the axial bore and a fastening bolt is provided to fasten and elastically deform the attachment block via the separator, whereby the attachment block is pressed against and secured to the leading end of the clamp rod. Therefore, the attachment block can reliably be pressed against and secured to the leading end of the clamp rod.

According to the swing clamp apparatus of the second aspect (claim 7), particularly, an attachment block fixed to the leading end of the clamp rod and to which the clamp arm is detachably attached is provided, one of the attachment block and clamp arm has a clamping force transmission pin oriented in the direction parallel to the orthogonal direction to the axis, and the other of the attachment block and clamp arm has a pin engagement engaging with the pin for integrally coupling the mounted clamp arm to the attachment block and, when the clamp arm is attached/detached to/from the attachment block, the pin engages/disengages with/from the pin engagement in the direction orthogonal to the axis and to the center line of the pin. Therefore, in replacing the clamp arm, the pin is disengaged from the pin engagement to remove the clamp arm from the attachment block while the pin stays on one of the attachment block and clamp arm. Then, the pin on one of the attachment blocks and a new clamp arm is engaged with the pin engagement on the other to attach the new clamp arm to the attachment block.

When the clamp arm is mounted on the attachment block, the pin engages with the pin engagement to couple the positioned clamp arm to the attachment block in an integrated manner. The clamping force of the clamp rod is transmitted from the attachment block to the clamp arm via the pin. More specifically, the attachment block is pre-positioned and fixed to the clamp rod at a desired position and, then, the clamp arm is positioned and attached to the clamp rod (attachment block) at desired position. The pin engages/disengages with/from the pin engagement to attach/detach the clamp arm to/from the attachment block without attaching/detaching the pin. Consequently, the clamp arm replacement workload is significantly reduced. Particularly, it is significantly convenient that the clamp arm replacement workload is remarkably reduced where the clamp arm is frequently replaced.

According to the swing clamp apparatus of claim 8, a pin hole is formed through the attachment block and clamp arm in the direction parallel to the center line of the pin and a clamping force transmission pin is inserted in the pin hole. Therefore, the clamp arm may be attached/detached to/from the attachment block while the clamping force transmission pin is removed from the pin hole. With the clamp arm being mounted on the attachment block, the clamping force transmission pin may be inserted in the pin hole to reliably couple the attachment block and clamp arm. The clamping force of the clamp rod is reliably transmitted from the attachment block to the clamp arm via the clamping force transmission pin and pin.

According to the swing clamp apparatus of claim 9, the pin and clamping force transmission pin are provided on either side of the clamp rod in the longitudinal direction of the clamp arm. Therefore, the clamping force of the clam rod is effectively transmitted from the attachment block to the clamp arm via the pin and clamping force transmission pin.

According to the swing clamp apparatus of claim 10, a clamping force transmission pin member is inserted in one of the attachment block and clamp arm and the clamping force transmission pin member constitutes the pin. Therefore, the pin can easily be provided to one of the attachment block and clamp arm, which is advantageous for production.

According to the swing clamp apparatus of claim 11, the attachment block is formed as a rectangular block, the clamp arm has a forked part in the base end part, and the part of the clamp arm including the forked part forms a housing recess that is open at the base end and in which the attachment block is fitted. Therefore, for replacing the clamp arm, the engaging/disengaging of the pin with/from the pin engagement, namely the attachment/detachment of the clamp arm to/from the attachment block, can reliably be done and the clamp arm can reliably be positioned and attached to the attachment block.

According to the swing clamp apparatus of claim 12, pairs of the pins and pin engagements are symmetrically provided in the width direction of aid clamp arm, the pair of pins is closer to the base end of the clamp arm than the clamping force transmission pin and protrudes from the attachment block in the directions away from each other, and the pair of pin engagements consists of a pair of U-shaped grooves notched in the forked part of the clamp arm from the base end. Therefore, a pair of pin engagements having a simple structure allows the reliable engagement/disengagement of a pair of pins with/from a pair of pin engagements.

According to the swing clamp apparatus of claim 13, the pin is closer to the base end of the clamp arm than the clamping force transmission pin and provided across the forked part of the clamp arm, and the pin engagement consists of a U-shaped groove notched in the attachment block from the base end. Therefore, the same advantage as claim 12 is obtained.

According to the swing clamp apparatus of claim 14, the pin has on the outer periphery abutment surfaces that abut against smooth surfaces parallel to the orthogonal direction to the axis of the pin engagement. Therefore, the area pressure the pin receives from the pin engagement is reduced to prevent the pin and pin engagement from being damaged.
The invention will now be further described, by way of example, with reference to the accompanying drawings, in which:-

Fig.1 is a plan view of the swing clamp apparatus of the first aspect (claim 1).
Fig.2 is a cross-sectional view at the line II-II in Fig.1.
Fig.3 is a plan view of the attachment block.
Fig.4 is a cross-sectional view at the line IV-IV in Fig.3.
Fig.5 is a plan view of the clamp arm.
Fig.6 is a cross-sectional view at the line VI-VI in Fig.5.
Fig.7 is a front view of the clamping force transmission pin
Fig.8 is a plan view of the swing clamp apparatus of claim 6.
Fig.9 is a cross-sectional view at the line IX-IX in Fig.8.
Fig. 10 is a plan view of the attachment block.
Fig. 11 is a side view of the attachment block.
Fig. 12 is a plan view of the clamp arm.
Fig. 13 is a side view of the clamp arm.
Fig. 14 is a front view of the clamping force transmission pin.
Fig.15 is a vertical cross-sectional view of the swing clamp apparatus.
Fig.16 is a vertical cross-sectional view of the swing clamp apparatus.
Fig.17 is a perspective view of the swing clamp apparatus.
Fig. 18 is a perspective view of the swing clamp apparatus according to a
   modified embodiment.
Fig. 19 is a perspective view of the swing clamp apparatus of the second aspect (claim 7).
Fig.20 is a perspective view of the swing clamp apparatus (with no clamp arm attached).
Fig.21 is a plan view of a swing clamp apparatus.
Fig.22 is a cross-sectional view at the line A-A in Fig.21.
Fig.23 is a plan view of the attachment block.
Fig.24 is a cross-sectional view at the line B-B in Fig.23.
Fig.25 is a plan view of the clamp arm.
Fig.26 is a cross-sectional view at the line C-C in Fig.25.
Fig.27 is a plan view of a swing clamp apparatus.
Fig.28 is a cross-sectional view at the line D-D in Fig.27.
Fig.29 is a plan view of the attachment block.
Fig.30 is a cross-sectional view at the line E-E in Fig.29.
Fig.31 is a plan view of the clamp arm.
Fig.32 is a cross-sectional view at the line F-F in Fig.31.

### EXPLANATION OF NUMERALS

- 1, 11, 30, 40, 51, 61: swing clamp apparatus
- 2, 12, 52, 62: clamp body
- 3, 13, 53, 63: clamp rod
- 3b, 53b, 63b: tapered shaft part
- 4, 14, 31, 41, 54, 64: attachment block
- 4a, 54a, 64a: tapered axial bore
- 6, 16, 32, 42, 56, 66: clamp arm
- 6c, 16c: rectangular bore
- 7, 17, 57, 67: clamping force transmission pin
- 8, 18, 59, 69: drive mechanism
- 14a: axial bore
- 14b: slit (separator)
- 15: block fastening bolt
- 56d, 66d: forked part
- 56f, 66f: housing recess
- 56i, 64c: pin engagement (U-shaped groove)
- 58, 68: clamping force transmission part member
- 58a, 68a: pin
- 58b, 68b: abutment surface

The swing clamp apparatus of the present invention comprises a clamp body, a clamp rod supported by the clamp body reciprocally in the axial direction thereof and rotatably around the axis thereof, a clamp arm attached to the leading end of the clamp rod, and a drive means for reciprocating and rotating the clamp rod to switch the clamp arm between an unclamping position and a clamping position where the clamp arm is retracted in the axial direction and swung about the axis in relation to the unclamping position.

### First aspect

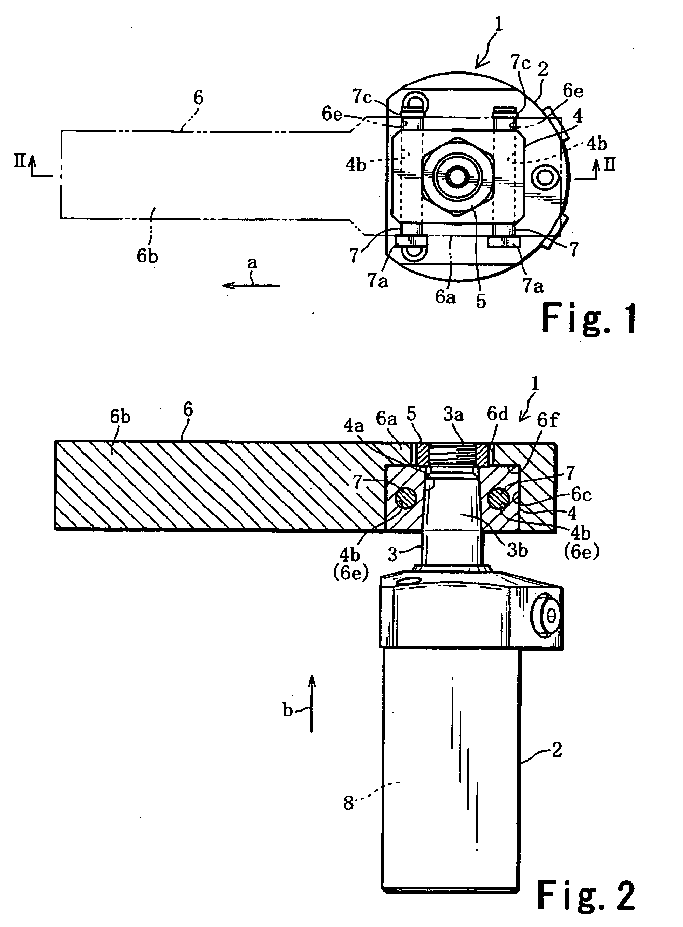

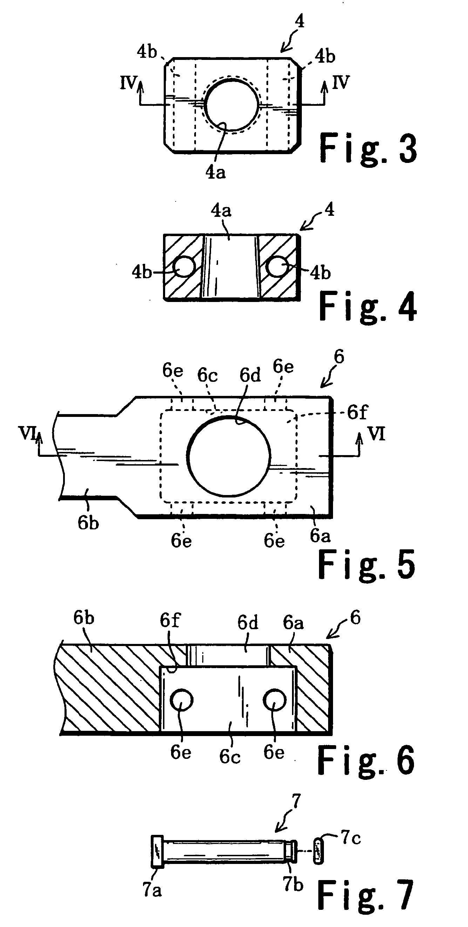

As shown in Figs. 1 to 7, a swing clamp apparatus 1 comprises a clamp body 2, a clamp rod 3, an attachment block 4, a block retaining nut 5, a clamp arm 6, a pair of clamping force transmission pins 7, and a drive mechanism 8. Here, the explanation is made with the assumption that the arrow a in Fig.1 indicates the forward direction and the arrow b in Fig.2 indicates the upward direction.

As shown in Figs. 1 and 2, the clamp body 2 is cylindrical and attached to a stationary platen to which a clamping object is anchored. The clamp rod 3 is inserted in and supported by the clamp body 2 reciprocally in the axial direction (vertical direction) and rotatably about the axis with the upper part protruding upward from the clamp body 2. The clamp rod 3 has a threaded part 3a at the leading end (top end). The leading end of the clamp rod 3 except for the threaded part 3a forms a tapered shaft part 3b having a diameter decreased toward the tip.

As shown in Figs. 1 to 4, the attachment block 4 is in the form of a rectangular block. More specifically, the attachment block 4 has a rectangular form smaller than the clamp body 2 in the plan view and larger in the longitudinal direction than in the transverse direction, having a thickness in the vertical direction nearly equal to the vertical dimension of the tapered shaft part 3b of the clamp rod 3.

The attachment block 4 has in the center a vertically penetrating tapered axial bore 4a in which the tapered shaft part 3b of the clamp rod 3 is fitted. With the tapered shaft part 3b being fitted in the tapered axial bore 4a, the threaded part 3a of the clamp rod 3 protrudes upward from the attachment block 4. The attachment block 4 has a pair of transversely (in the direction parallel to the orthogonal direction to the axis) elongated pin holes 4b formed through either end part in the longitudinal direction.

As shown in Figs. 1 and 2, the block retaining nut 5 is screwed on the threaded part 3a of the clamp rod 3 from above and abuts against the top surface of the attachment block 4 outside the outer periphery of the tapered axial bore 4a. The block retaining nut 5 presses the attachment block 4 downward so that the inner periphery surface of the tapered axial bore 4a of the attachment block 4 is pressed against and secured to the tapered shaft part 3b of the clamp rod 3.

As shown in Figs. 1, 2, 5, and 6, the clamp arm 6 has a coupling part 6a at the base end and an arm part 6b extending forward from the coupling part 6a in an integrated manner. The coupling part 6a is detachably fitted on the attachment block 4 from above. The coupling part 6a has a rectangular form larger than the attachment block 4 in the plan view and has a thickness in the vertical direction nearly equal to the vertical dimension of the threaded part 3a and tapered shaft part 3b of the clamp rod 3.

The coupling part 6a has an open-bottom rectangular bore 6c in which the attachment block 4 is fitted from below and an open-top circular bore 6d continued upward from the middle of the rectangular bore 6c and in which the block retaining nut 5 is fitted from below. The coupling part 6a further has two pairs of transversely elongated pin holes 6e in either end part in the longitudinal direction. The pin holes 6e in each pair transversely pass thorough the right and left sidewalls facing the rectangular bore 6c of the coupling part 6a. The pin holes 6e have the same diameter as the pin holes 4b of the attachment block 4.

The coupling part 6a has outside the outer periphery of the circular bore 6d a step 6f having an underside facing the rectangular bore 6c. When the attachment block 4 is fitted in the rectangular bore 6c and the step 6f is placed on the attachment block 4, the clamp arm 6 is positioned in the axial direction and in the rotative direction about the axis and mounted on the attachment block 4 with the pin holes 4b and 6e being aligned. Here, the rectangular bore 6c and step 6f constitute the positioner.

As shown in Figs. 1, 2, and 7, a pair of clamping force transmission pins 7 has nearly the same diameter as the pin holes 4b and 6e and has a head 7a at the base end and an annular groove 7b at the leading end. With the clamp arm 6 being mounted on the attachment block 4, the pair of clamping force transmission pins 7 is inserted in the pin holes 4b and 6e in the direction parallel to the orthogonal direction to the axis. Then, stopper rings 7c (O-rings) are provided in the annular grooves 7b of the clamping force transmission pins 7 protruding outside the pin holes 6e for retention. The clamping force transmission pins 7 couple the positioned clam arm 6 to the attachment block 4 in an integrated manner.

The drive mechanism 8 is provided in the cylinder body 2 for reciprocating and rotating the clamp rod 3 so as to switch the clamp arm 6 between an unclamping position and a clamping position where the clamp arm is retracted in the axial direction (moved downward) and swung about the axis in relation to the unclamping position. The drive mechanism 8 has, for example, a double-action hydraulic cylinder capable of driving the clamp rod 3 both upward and downward, or a single-action hydraulic cylinder driving the clamp rod 3 downward or upward and a spring member biasing the clamp rod 3 upward or downward.

Here, a guide mechanism (not shown) guiding the clamp rod 3 driven by the drive mechanism 8 in the vertical direction and in the rotative direction is provided in order to realize a specific clamping/unclamping operation (switching the clamp arm 6 between the unclamping position and the clamping position)

For clamping a clamping object, the clamp rod 3 is retracted by the drive mechanism 8 from the unclamping position of the clamp arm 6 and the clamping force due to the driving force is transmitted to the clamp arm 6 via the pair of clamping force transmission pins 7, whereby the clamping object is pressed by the clamp arm 6. The drive mechanism 8 and guide mechanism are not explained in detail here. For example, those disclosed in the Japanese Laid-Open Patent Application Nos. 2004-268187 and 2005-28535 may be used.

Functions and advantages of the above described swing clamp apparatus 1 will be described hereafter.
For replacing the clamp arm 6, first, the pair of clamping force transmission pins 7 is removed from the pin holes 4b and 6e of the attachment block 4 and clamp arm 6 to disengage the clamp arm 6 from the attachment bock 4. Then, the clamp arm 6 is removed from the attachment block 4.

Then, a new clamp arm 6 is mounted on the attachment block 4. Then, the clamp arm 6 is positioned on the attachment block 4, whereby the pin holes 4b of the attachment block 4 and the pin holes 6e of clamp arm 6 are aligned. Then, the pair of clamping force transmission pins 7 is inserted in the pin holes 4e and 6e in the direction parallel to the orthogonal direction to the axis to couple the positioned clamp arm 6 to the attachment block 4 in an integrated manner.

As described above, the attachment block 4 is pre-positioned and fixed to the clamp rod 3 at a desired position, whereby the clamp arm 6 may be positioned and attached to the clamp rod 3 (attachment block 4) at a desired position in a simple and reliable manner. The clamp arm 6 can easily be attached to the attachment block 4 by the clamping force transmission pins 7 without fastening it. Consequently, the workload of replacing the clamp arm 6 can certainly be reduced. Particularly, it is significantly convenient that the workload of replacing the clamp arm 6 can remarkably be reduced where the clamp arm 6 is frequently replaced.

The rectangular bore 6c and step 6f are provided as a means for positioning the clamp arm 6 on the attachment block 4 in the axial direction and in the rotative direction about the axis. Therefore, mounted on the attachment block 4, the clamp arm 6 is positioned thereon at a coupling position in a simple and reliable manner. In this state, the pair of clamping force transmission pins 7 is easily inserted in the pin holes 4b and 6e of the attachment block 4 and clamp arm 6. Consequently, the clamp arm 6 may be replaced in a simpler and more reliable manner.

The attachment block 4 is in the form of a rectangular block and the clamp arm 6 has a rectangular bore 6c in which the attachment block 4 is fitted. In other words, the clamp arm 6 is fitted on the attachment block 4 and a pair of clamping force transmission pins 7 is reliably inserted in the attachment block 4 and clamp arm 6 in the direction parallel to the orthogonal direction to the axis, whereby the clamping force transmission pins 7 reliably couple the positioned clamp arm 6 to the attachment block 4 in an integrated manner. Furthermore, the clamp arm 6 is reliably positioned on the attachment block 4 in the rotative direction about the axis using a simple structure.

The clamp rod 3 has at the leading end a tapered shaft part 3b having a diameter decreased toward the tip and the attachment block 4 has a tapered axial bore 4a in which the tapered shaft part 3b is fitted. Therefore, pressed by the block retaining nut 5 in the axially retracting direction, the attachment block 4 is reliably pressed against and secured to the leading end of the clamp rod 3.

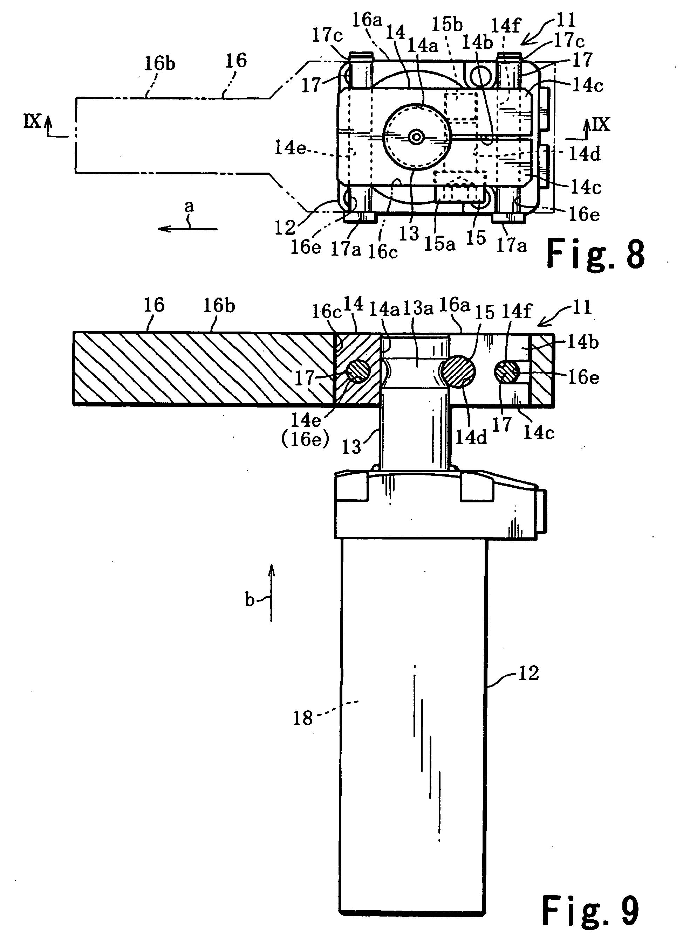

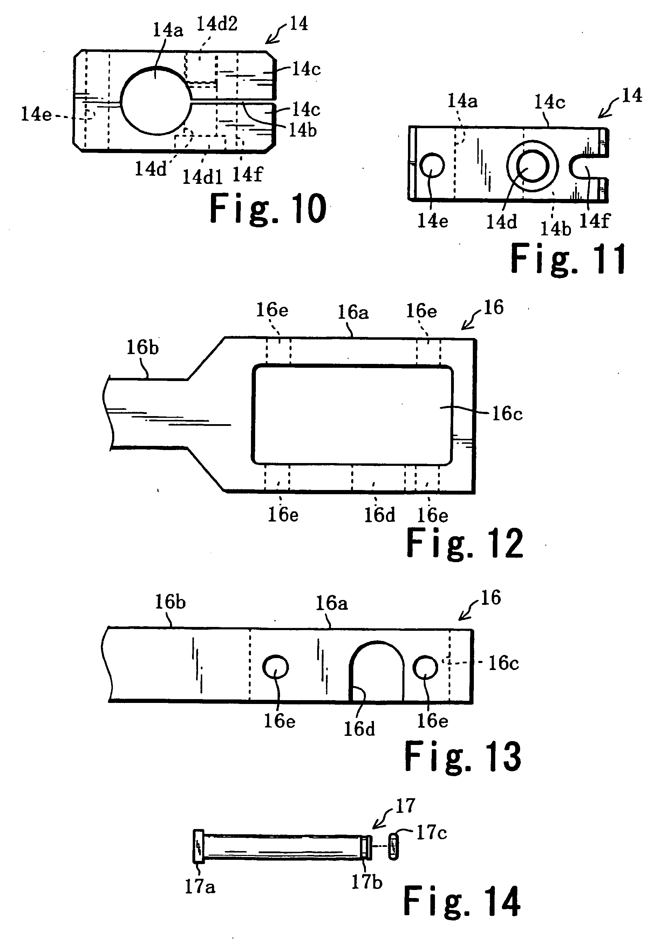

As shown in Figs. 8 to 14, a swing clamp apparatus 11 comprises a clamp body 12, a clamp rod 13, an attachment block 14, a block fastening bolt 15, a clamp arm 16, a pair of clamping force transmission pins 17, and a drive mechanism 8. Here, the explanation is made with the assumption that the arrow a in Fig.8 indicates the forward direction and the arrow b in Fig.9 indicates the upward direction.

As shown in Figs. 8 and 9, the clamp body 12 and drive mechanism 18 have the same functions as the clamp body 2 and drive mechanism 8 of Embodiment 1. The swing clamp apparatus 11 has the same guide mechanism as of Embodiment 1. Therefore, the detailed explanation regarding the clamp body 12, drive mechanism 18, and guide mechanism is omitted. The clamp rod 13 is inserted in and supported by the clamp body 12 reciprocally in the axial direction and rotatably about the axis with the upper part protruding upward from the clamp body 12. The clamp rod 13 has an overall straight form and an annular groove 13a at the leading end.

As shown in Figs. 8 to 11, the attachment block 14 is in the form of a rectangular block. More specifically, the attachment block 14 has a rectangular form smaller than the clamp body 12 in the plan view and larger in the longitudinal direction than in the transverse direction, having a thickness in the vertical direction approximately three times larger than the vertical dimension of the annular groove 13a of the clamp rod 13.

The attachment block 14 has an axial bore 14a formed axially through it at a position slightly shifted toward the front from the center, in which the leading end of the clamp rod 13 is fitted. The attachment block 14 has a longitudinal slit 14b as a separator extending from the axial bore 14a to the rear end. The slit 14b separates the attachment block 14 in the entire rear part from the axial bore 14a in the transverse direction to create separated parts 14c.

The attachment block 14 has a transversely elongated bolt hole 14d formed transversely through it at a position slightly shifted backward from the center. The bolt hole 14d passes through the front part of the slit 14b and partly overlaps with the axial bore 14a at the midpoint of its length. The bolt hole 14d has a large-diameter hole 14d1 at the right end and a threaded hole 14d2 at the left end.

The attachment block 14 has a transversely elongated pin hole 14e formed transversally through the front end part. The attachment block 14 (separated parts 14c) has a notch 14f formed from the rear end toward the front across the entire width and having a vertical dimension equal to the diameter of the pin hole 14e.

As shown in Figs. 8 and 9, the block fastening bolt 15 has nearly the same diameter as the bolt hole 14d and has a head 15a at the base end and a threaded shaft part 15b at the leading end. The leading end of the clamp rod 13 is inserted in the axial bore 14a of the attachment block 14. With the annular groove 13a and bolt hole 14d being aligned in the vertical direction, the block fastening bolt 15 is inserted in the bolt hole 14d and engages with the annular groove 13a. The head 15a is partly fitted in the large-diameter hole 14d1 and the threaded shaft part 15b is screwed in the threaded hole 14d2. In this state, the leading surface of the clamp rod 13 and the top surface of the attachment block 14 are nearly at the same level.

The block fastening bolt 15 engages with the annular groove 13a, whereby the attachment block 14 is vertically positioned in relation to the clamp rod 13. When the right and left separated parts 14b are fastened by the block fastening bolt 15 via the slit 14b, the attachment block 14 is resiliently deformed so that the separated parts 14c come closer to each other. Then, the inner periphery surface of the axial bore 14a of the attachment block 14 is pressed against and secured to the leading end of the clamp rod 13.

As shown in Figs. 8, 9, 12, and 13, the clamp arm 16 has a coupling part 16a at the base end and an arm part 16b extending from the coupling part 6a in an integrated manner. The coupling part 16a is detachably fitted on the attachment block 14 from above. The coupling part 16a has a rectangular form larger than the attachment block 14 in the plane view and has a thickness in the vertical direction nearly equal to the attachment block 14.

The coupling part 16a has in the center a vertically penetrating rectangular bore 16c in which the attachment block 14 is fitted from below. The coupling part 16a further has in the right wall facing the rectangular bore 16c a transversely penetrating notch 16d notched upward from the bottom and having a longitudinal dimension equal to the diameter to the head 15a of the block fastening bolt 15. The coupling part 16a also has two pairs of transversely elongated pin holes 16e in either end part in the longitudinal direction. The pin holes 16e in each pair are formed thorough the right and left sidewalls facing the rectangular bore 16c of the coupling part 16a. The pin holes 16e have the same diameter as the pin holes 14e of the attachment block 14.

The attachment block 14 is fitted in the rectangular bore 16c and the head 15a of the block fastening bolt 15 engages with the notch 16d for placing and support, whereby the clamp arm 16 is mounted on the attachment block 14 in position in the axial direction and in the rotative direction about the axis with the pin holes 14b and 16e being aligned. Here, the rectangular bore 16c and head 15a of the block fastening bolt 15 constitute the positioner.

As shown in Figs. 8, 9, and 14, a pair of clamping force transmission pins 17 has nearly the same diameter as the pin holes 14e and 16e and has a head 17a at the base end and an annular groove 17b at the leading end. With the clamp arm 16 being mounted on the attachment block 4, the pair of clamping force transmission pins 7 is inserted in the pin holes 14e and 16e and notch 14f in the direction parallel to the orthogonal direction to the axis. Then, stopper rings 17c are provided in the annular grooves 17b of the clamping force transmission pins 17 protruding outside the pin holes 16e for retention. The clamping force transmission pins 17 couple the positioned clam arm 6 to the attachment block 14 in an integrated manner.

According to the above described swing clamp apparatus 11, the attachment block 14 has an axial bore 14a in which the leading end of the clamp rod 13 is fitted and a slit 14b continued from the axial bore 14a, and a block fastening bolt 15 is provided to fasten the separated parts 14c via the slit 14b and resiliently deform the attachment block 14 so that it is pressed against and secured to the leading end of the clamp rod 13. Therefore, the attachment block 14 can reliably be pressed against and secured to the leading end of the clamp rod 13.

The attachment block 14 (separated parts 14c) has in the rear end part a notch 14f through which the clamping force transmission pin 17 is inserted. Therefore, even if the separated parts 14c are fastened and resiliently deformed by the block fastening bolt 15, the clamping force transmission pin 17 can smoothly be inserted in the notch 14f, whereby the clamp arm 16 is reliably coupled to the attachment block 14. As for the other features, the same advantages as Embodiment 1 can be obtained.

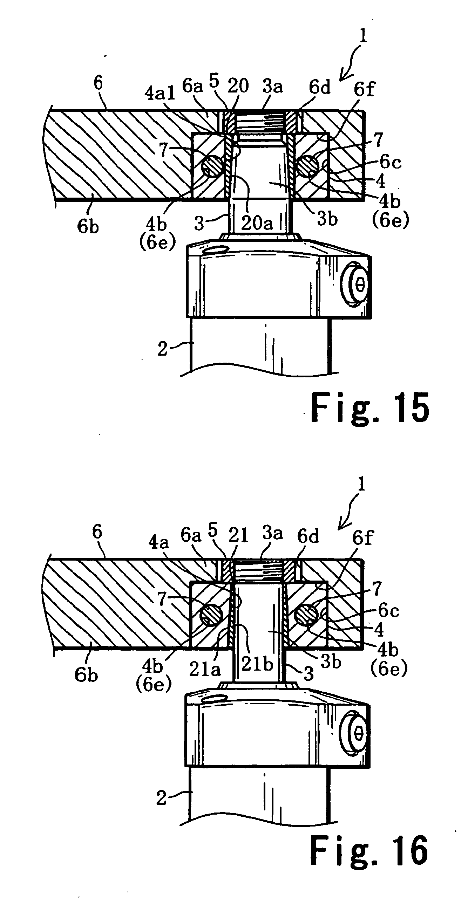

Further modifications will be described hereafter.
1) In a modification of the first aspect , as shown in Fig. 15, the attachment block 14 has a straight axial bore 14a1 in place of the tapered axial bore 4a. Then, the attachment block 4 is provided with a tapered ring 20 that is fitted in the axial bore 4a1 and has a tapered axial bore 20a in which the tapered shaft part 3b of the clamp rod 3 is fitted.

2) In a modification of the first aspect, as shown in Fig. 16, the attachment block 14 is provided with a tapered ring 21 having a tapered outer periphery 21a and fitted in the tapered axial bore 4a. The tapered ring 21 has a straight axial bore 21b and the straight leading end of the clamp rod 3 is fitted in the axial bore 21b.

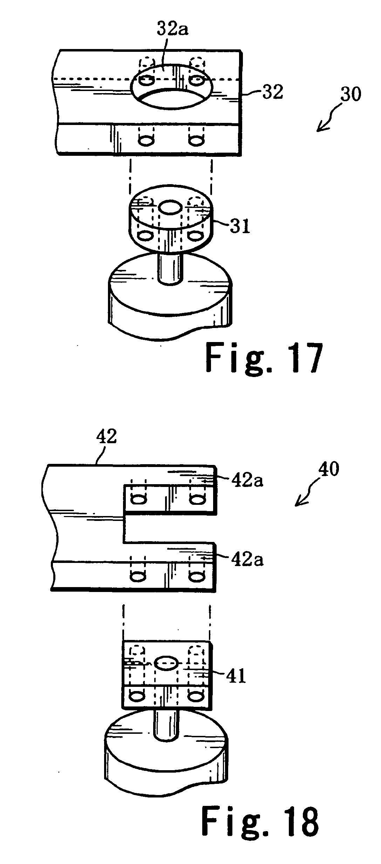

3) As in a swing clamp apparatus 30 shown in Fig. 17, an attachment block 31 is in the form of a circular block and a clamp arm 32 has a circular bore 32a in which the attachment block 31 is fitted.
4) As in a swing clamp apparatus 40 shown in Fig. 18, an attachment block 41 is in the form of a rectangular block and a clamp arm 42 has at the base end a forked part having a pair of coupling block pieces 42a. The attachment block 41 is fitted between the pair of coupling block pieces 42a, whereby the clamp arm 41 is coupled to the attachment block 41.

5) A single clamping force transmission pin may be used to couple the positioned clamp arm to the attachment block in an integrated manner where possible in those having the above described positioner. Alternatively, three or more clamping force transmission pins may be used to couple the positioned clamp arm to the attachment block in an integrated manner.

### Second aspect

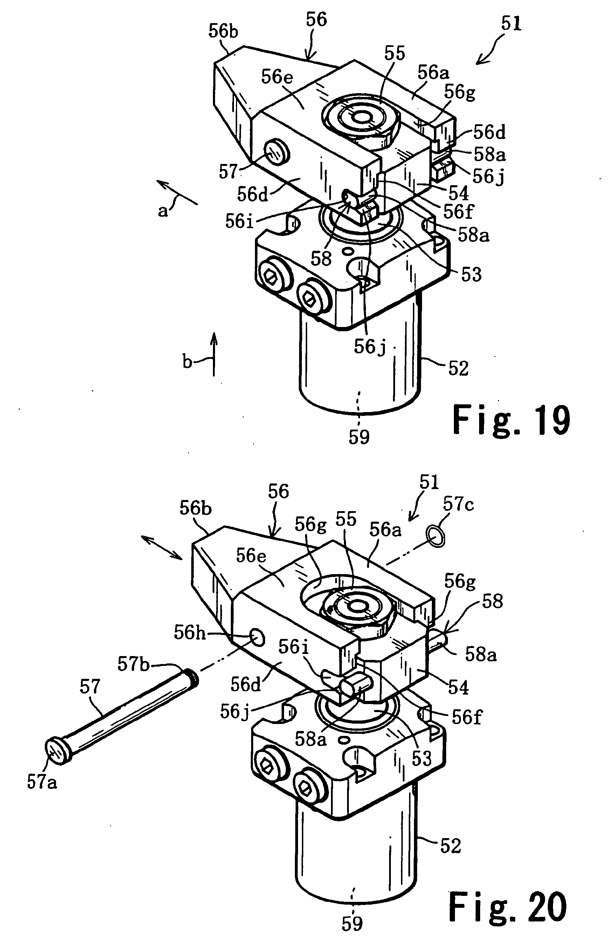

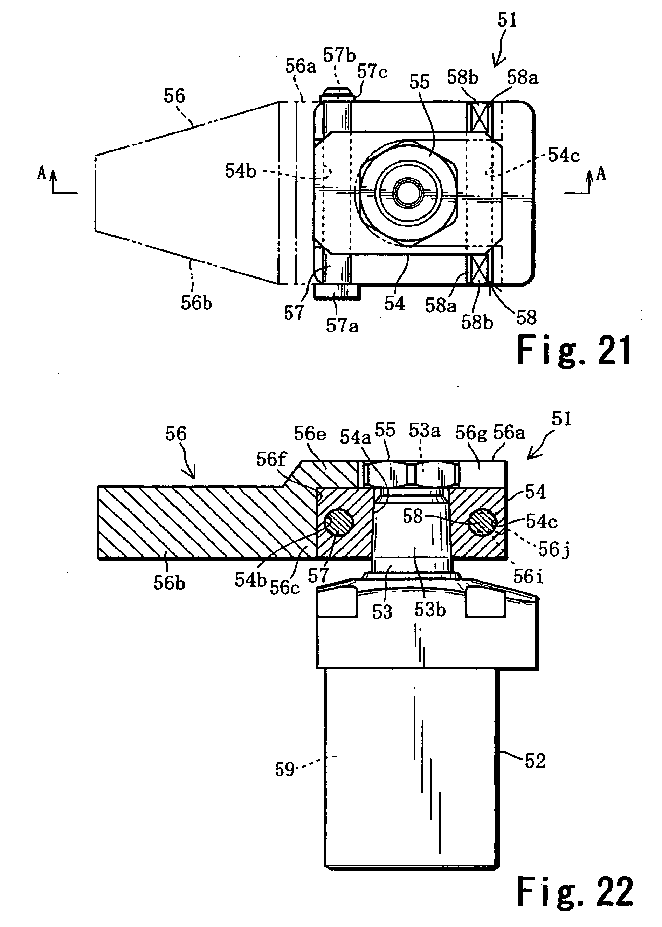

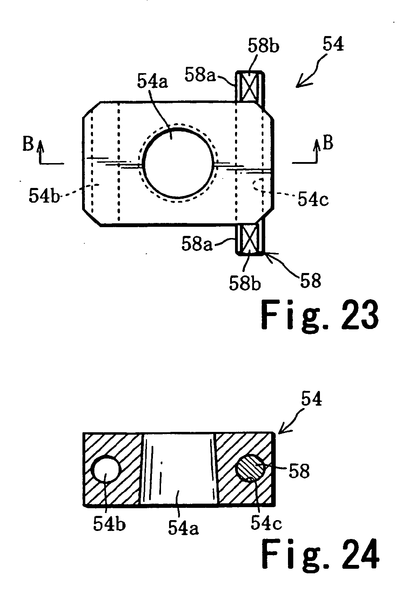

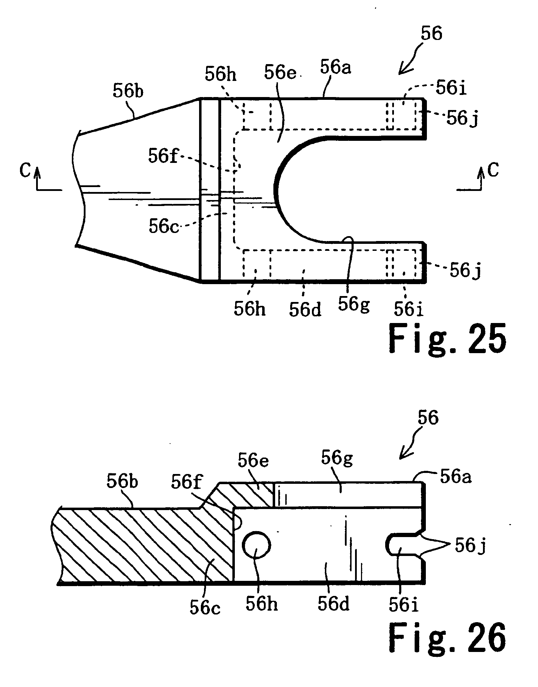

As shown in Figs. 19 to 26, a swing clamp apparatus 51 comprises a clamp body 52, a clamp rod 53, an attachment block 54, a block retaining nut 55, a clamp arm 56, a clamping force transmission pin 57, a clamping force transmission pin member 58, and a drive mechanism 59. Here, the explanation will be made with the assumption that the arrow a indicates the forward direction and the arrow b indicates the upward direction in Fig. 19.

As shown in Figs. 19 to 22, the clamp body 52, clamp rod 53, block retaining nut 55, and drive mechanism 59 have the same functions as the clamp body 2, clamp rod 3, block retaining nut 5, and drive mechanism 8 of the first aspect . The swing clamp apparatus 51 has the same guide mechanism as the first aspect. Therefore, the detailed explanation regarding the clamp body 52, clamp rod 53, block retaining nut 55, and drive mechanism 59 is omitted.

As shown in Figs. 19 to 24, the attachment block 54 is in the form of a rectangular block. More specifically, the attachment block 54 has a rectangular form smaller than the clamp body 52 in the plan view and larger in the longitudinal direction than in the transverse direction, having a thickness in the vertical direction nearly equal to the vertical dimension of the tapered shaft part 53b of the clamp rod 53.

The attachment block 54 has in the center a vertically penetrating tapered axial bore 54a in which the tapered shaft part 53b of the clamp rod 53 is fitted. With the tapered shaft part 53b being fitted in the tapered axial bore 54a, the threaded part 53a at the top end of the clamp rod 53 protrudes upward from the attachment block 54. A block retaining nut 55 is screwed on the threaded part 53a from above, whereby the attachment block 54 is fastened to the clamp rod 53 by the block retaining nut 55.

The attachment block 54 has a pair of transversely elongated pin holes 54b and 54c formed transversely through the front and rear end parts. A clamping force transmission pin 57 is detachably inserted in the front pin hole 54b and a clamping force transmission pin member 58 is inserted in and secured to (for example pressed in) the rear pin hole 54c. The clamping force transmission pin member 58 constitutes a pair of right and left clamping force transmission pins 58a. The pair of pins 58a protrudes from the attachment block 54 in the directions away from each other (in the transverse direction). Each pin 58a has a pair of top and bottom smooth abutment surfaces 58b formed on the part of the outer periphery thereof that protrudes from the attachment block 54.

In other words, the attachment block 54 has a pair of pins 58a oriented in the direction parallel to the orthogonal direction to the axis and provided symmetrically in the width (transverse) direction of the clamp arm 56. The pins 58a are closer to the base end (rear end) of the clamp arm 56 than the clamping force transmission pin 57. The clamping force transmission pin 57 and clamping force transmission pin member 58 (a pair of pins 58a) are provided on either side of the clamp rod 53 in the longitudinal (front-to-back) direction of the clamp arm 56.

As shown in Figs. 19 to 22, 25, and 26, the clamp arm 56 has a coupling part 56a at the base end and an arm part 56b extending from the coupling part 56a in an integrated manner. The coupling part 56a is detachably fitted on the attachment block 54. The coupling part 56a is larger than the attachment block 54 in the plan view and has a thickness in the vertical direction nearly equal to the vertical dimension of the threaded part 53a and tapered shaft part 53b of the clamp rod 53.

The coupling part 56a has an upright wall 56c at the front, a forked part 56d (a pair of right and left sidewalls 56d) extending backward from the upright wall 56c, and a top wall 56e extending over the upright wall 56c and forked part 56d. The upright wall 56c, forked part 56d, and top wall 56e form a housing recess 56f that is open at the bottom and rear end and in which the attachment block 54 is fitted. The top wall 56e has an opening 56g that is continued from the housing recess 56f and open at the top and rear end and in which the block retaining nut 55 is fitted.

The coupling part 56a has a pair of pin holes 56h formed transversely through the front end part of the forked part 56d. The pin holes 56h have nearly the same diameter as the pin hole 54b of the attachment block 54. The coupling part 56a further has a pair of pin engagements 56i in the rear end part of the forked part 56d. The engaging parts 56i engage with the pair of pins 58a to couple the mounted clamp arm 56 to the attachment block 54 in an integrated manner.

The pair of pin engagements 56i is provided symmetrically in the width direction (transverse direction) of the clamp arm 56, consisting of a pair of U-shaped grooves 56i notched in the forked part 56d from the base end (rear end). The U-shaped grooves 56i have a vertical dimension equal to the minimum diameter of the part of the pin 58a where the abutment surfaces 58b are formed. The forked part 56d has at the rear end tapered parts 56j continued from the rear ends of the U-shaped grooves 56i and having a vertical dimension increased toward the rear end.

The attachment block 54 is fitted in the housing recess 56f, the forked part 56d and top wall 56e (upright wall 56c) abut against the attachment block 54 and the pair of pins 58a of the attachment block 54 engages with the pair of pin engagements 56i at the rear end of the forked part 56d, whereby the clamp arm 56 is positioned and mounted on the attachment block 54 with the pin holes 54b and 56h being aligned.

As shown in Figs. 19 to 22, the clamping force transmission pin 57 has nearly the same diameter as the pin holes 54b and 56h and has a head 57a at the base end and an annular groove 57b at the leading end. With the clamp arm 56 being mounted on the attachment block 54, the clamping force transmission pin 57 is inserted in the pin holes 54b and 56h. Then, a stopper ring 57c is provided in the annular groove 57b of the clamping force transmission pin 57 protruding outside the pin hole 56h for retention. The clamping force transmission pin 57 and pair of pins 58a couple the positioned clam arm 56 to the attachment block 54 in an integrated manner.

Functions and advantages of the above described swing clamp apparatus 51 will be described hereafter.
As shown in Fig.20, for replacing the clamp arm 56, first, the clamping force transmission pin 57 is removed from the pin holes 54b and 56h of the attachment block 54 and clamp arm 56 to disengage the clamp arm 56 from the attachment block 54. Then, the clamp arm 56 is moved forward to disengage the pair of pins 58a from the pair of pin engagements 56i and then removed from the attachment block 54. Then, a new clamp arm 56 is mounted on the attachment block 54.

For mounting a new clamp arm 56, the clamp arm 56 is held horizontally and moved from the front to back of the attachment block 54, whereby the attachment block 54 is housed in the housing recess 56f and the pair of pins 58a engages with the pair of pin engagements 56i. Here, even if the vertical position of the clamp arm 56 in relation to the attachment block 54 is slightly shifted, the tapered parts 56j are guided by the pins 58a and the pair of pins 58a reliably engages with the pair of pin engagements 56i.

In this way, the clamp arm 56 is mounted on the attachment block 54 and the pin hole 54b of the attachment block 54 and the pin holes 56h of the clamp arm 56 are aligned. Then, the clamp force transmission pin 57 is inserted in the pin holes 54b and 56h to couple the positioned clamp arm 56 to the attachment 54 in an integrated manner.

As described above, for attaching/detaching the clamp arm 56 to/from the attachment block 54, the pair of pins 58a engages/disengages with/from the pin engagements 56i in the direction orthogonal to the axis and orthogonal to the center line of the pair of pins 58a. When the clamp arm 56 is mounted on the attachment block 54, the pair of pins 58a engages with the pin engagements 56i to couple the positioned clamp arm 56 to the attachment block 54 in an integrated manner. The clamping force of the clamp rod 53 is transmitted from the attachment block 54 to the clamp arm 56 via the pair of pins 58a.

With the attachment block 54 being pre-positioned and fixed to the clamp rod 53 at a desired position, the clamp arm 56 may be positioned and attached to the clamp rod 53 (attachment block 54) at a desired position. The pair of pins 58a engages/disengages with/from the pair of pin engagements 56i to attach/detach the clamp arm 56 to/from the attachment block 54 without attaching/detaching the pair of pins 58a. Consequently, the workload of replacing the clamp arm 56 can significantly be reduced. Particularly, it is significantly convenient that the workload of replacing the clamp arm 56 can remarkably be reduced where the clamp arm 56 is frequently replaced.

The attachment block 54 and clamp arm 56 have the pin holes 54b and 56h formed through them in the direction parallel to the center line of the pins 58a and the clamping force transmission pin 57 is inserted in these pin holes 54b and 56h. Therefore, the clamp arm 56 may be attached/detached to/from the attachment block 54 while the clamping force transmission pin 57 is removed from the pin holes 54b and 56h. After the clamp arm 56 is mounted on the attachment block 54, the clamping force transmission pin 57 is inserted in the pin holes 54b and 56h to couple the clamp arm 56 to the attachment block 54 in an integrated manner. Consequently, the clamping force of the clamp rod 53 is reliably transmitted from the attachment block 54 to the clamp arm 56 via the clamping force transmission pin 57 and pair of the pins 58a.

The pair of pins 58a and clamping force transmission pin 57 are provided on either side of the clamp rod 53 in the longitudinal direction of the clamp arm 56. Therefore, the clamping force of the clamp rod 53 can effectively be transmitted to the clamp arm 56 via the pair of pins 58a and clamping force transmission pin 57. A single clamping force transmission pin member 58 is inserted in the attachment block 54 and this clamping force transmission pin member 58 constitutes the pair of pins 58a. Therefore, the pair of pins 58a is easily provided to the attachment block 54 and shared by multiple replaceable clamp arms 56, which is significantly advantageous for production.

The attachment block 54 is in the form of a rectangular block and the clamp arm 56 has a forked part 56d at the base end. The part of the clamp arm 56 including the forked part 56d constitutes an open-bottom housing recess 56f in which the attachment block 54 is fitted. Therefore, for replacing the clamp arm 56, the clamp arm 56 is moved forward/backward to reliably disengage/engage the pair of pins 58a from/with the pair of pin engagements 56i and then detach/attach the clamp arm 56 from/to attachment block 54. Furthermore, the clamp arm 56 can reliably be positioned and mounted on the attachment block 54.

The pairs of pins 58a and pin engagements 56i are provided symmetrically in the width direction of the clamp arm 56. The pair of pins 58a is closer to the base end of the clamp arm 56 than the clamping force transmission pin 57 and protrudes from the attachment block 54 in the directions away from each other. The pair of pin engagements 56i consists of a pair of U-shaped grooves 56i notched in the forked part 56d from the base end. Therefore, the pair of pin engagements 56i having a simple structure allows the reliable engagement/disengagement of the pair of pins 58a with/from the pair of pin engagements 56i.

The pins 58a have on the outer periphery the abutments surfaces 58b that can abut against the smooth surfaces parallel to the orthogonal direction to the axis of the pin engagements 56i. Therefore, the area pressure the pins 58a receive from the pin engagements 56i may be reduced to prevent the pins 58a and pin engagement 56i from being damaged.

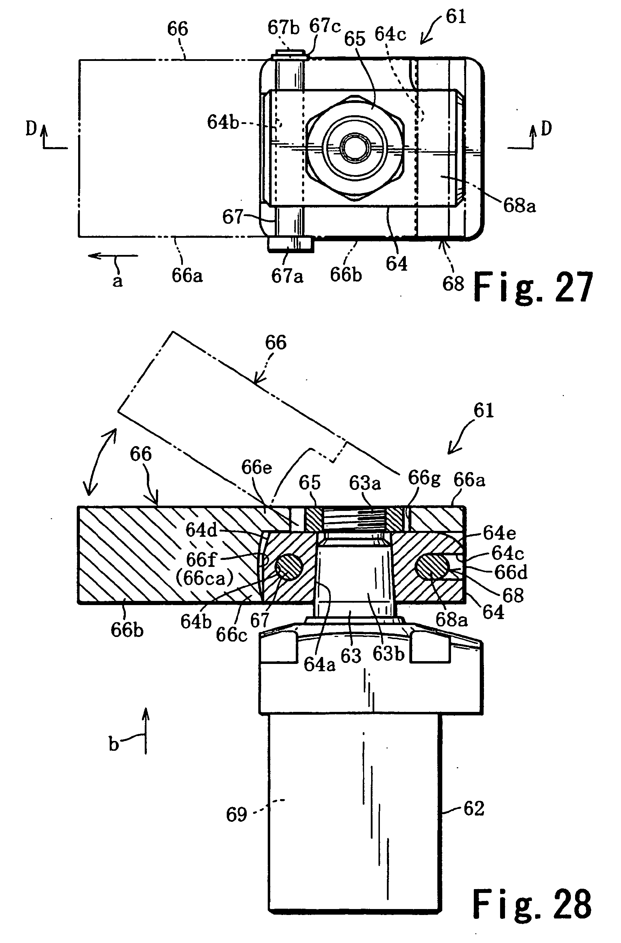

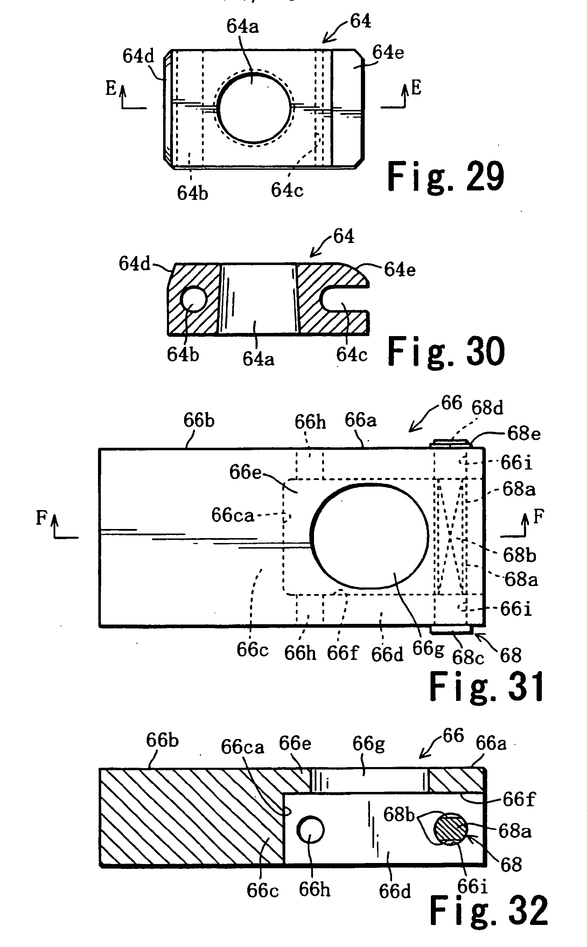

As shown in Figs. 27 to 30, a swing clamp apparatus 61 comprises a clamp body 62, a clamp rod 63, an attachment block 64, a block retaining nut 65, a clamp arm 66, a clamping force transmission pin 67, a clamping force transmission pin member 68, and a drive mechanism 69. Here, the explanation is made with the assumption that the arrow a in Fig.27 indicates the forward direction and the arrow b in Fig.28 indicates the upward direction.

As shown in Figs. 27 and 28, the clamp body 62, clamp rod 63, block retaining nut 65, and drive mechanism 69 have the same functions as the clamp body 2, clamp rod 3, block retaining nut 5, and drive mechanism 8 of the first aspect . The swing clamp apparatus 61 has the same guide mechanism as of the first aspect. Therefore, the detailed explanation regarding the clamp body 62, clamp rod 63, block retaining nut 65, and drive mechanism 69 is omitted.

As shown in Figs. 27 to 30, the attachment block 64 is in the form of a rectangular block. More specifically, the attachment block 64 has a rectangular form smaller than the clamp body 62 in the plan view and larger in the longitudinal direction than in the transverse direction, having a thickness in the vertical direction nearly equal to the vertical dimension of the tapered shaft part 63b of the clamp rod 63.

The attachment block 64 has in the center a vertically penetrating tapered axial bore 64a in which the tapered shaft part 63b of the clamp rod 63 is fitted. With the tapered shaft part 63b being fitted in the tapered axial bore 64a, the threaded part 63a at the leading end of the clamp rod 63 protrudes upward from the attachment block 64. A block retaining nut 65 is screwed on the threaded part 63a from above, whereby the attachment block 64 is fastened to the clamp rod 63 by the block retaining nut 65.

The attachment 64 has a transversely elongated pin hole 64b formed transversely through the front end part. The attachment 64 further has a pin engagement 64c consisting of a U-shaped groove 64c notched in the rear end part from the rear end across the entire width. A clamping force transmission pin 67 is detachably inserted in the pin hole 64b and a clamping force transmission pin member 58 (pin 68a) engages/disengages with/from the pin engagement 64c. The attachment block 64 has a sloped part 64b on the front end at the top and a curved part 64e on the rear end at the top.

As shown in Figs. 27, 28, 31, and 32, the clamp arm 66 has a coupling part 66a at the base end and an arm part 66b extending from the coupling part 66a in an integrated manner. The coupling part 66a is detachably fitted on the attachment block 64. The coupling part 66a is larger than the attachment block 64 in the plan view and has a thickness in the vertical direction nearly equal to the vertical dimension of the threaded part 63a and tapered shaft part 63b of the clamp rod 63.

The coupling part 66a has an upright wall 66c at the front, a forked part 66d (a pair of right and left sidewalls 66d) extending backward from the upright wall 66c, and a top wall 66e extending over the upright wall 66c and forked part 66d. The upright wall 66c, forked part 66d, and top wall 66e form a housing recess 66f that is open at the bottom and rear end and in which the attachment block 64 is fitted. The top wall 66e has an opening 66g that is continued from the housing recess 66f and open at the top and in which the block retaining nut 65 is fitted.

The coupling part 66a has a pair of pin holes 66h formed transversely through the front end part of the forked part 66d. The pin holes 66h have nearly the same diameter as the pin hole 64b of the attachment block 64. The coupling part 66a further has a pair of pin engagements 66i formed transversely through the rear end part of the forked part 66d. A clamping force transmission member 68 is inserted in the pin holes 66h.

The clamping force transmission member 68 is rotatably mounted in the forked part 66d while retained by its head 68c and a stopper ring 68e provided in an annular groove 68d at its leading end. The clamping force transmission pin member 68 constitutes a clamping force transmission pin 68a capable of engaging/disengaging with/from the pin engagement 64c. The pin 68a has a pair of smooth abutment surfaces 68b facing in the opposite directions to each other between the forked part 66d. The part of the pin 68a where the abutment surfaces 68b are formed has the minimum diameter equal to the vertical dimension of the U-shaped groove 64c.

As described above, the pin 68a is provided to the clamp arm 66 in the direction parallel to the orthogonal direction to the axis (transverse direction) and closer to the base end (rear end) of the clamp arm 66 than the clamping force transmission pin 67. The clamping force transmission pin 67 and clamping force transmission pin member 68 (pin 68a) are provided on either side of the clamp rod 63 in the longitudinal (front-to-back) direction of the clamp arm 66.

The attachment block 64 is fitted in the housing recess 66f, the forked part 66d and top wall 66e abut against the attachment block 64, and the pin 68a of the clamp arm 66 engages with the pin engagement 64c at the rear end of the coupling part 64e, whereby the clamp arm 66 is positioned and mounted on the attachment block 64 with the pin holes 54b and 56h being aligned.

As shown in Figs. 27 and 28, the clamping force transmission pin 67 has nearly the same diameter as the pin holes 64b and 66h and has a head 67a at the base end and an annular groove 67b at the leading end. With the clamp arm 66 being mounted on the attachment block 64, the clamping force transmission pin 67 is inserted in the pin holes 64b and 66h. Then, a stopper ring 67c is provided in the annular groove 67b of the clamping force transmission pin 67 protruding outside the pin hole 66h for retention. The clamping force transmission pin 67 and pin 68a couple the positioned clam arm 66 to the attachment block 64 in an integrated manner.

Functions and advantages of the above described swing clamp apparatus 61 will be described hereafter.
As shown in Fig.28, for replacing the clamp arm 66, first, the clamping force transmission pin 67 is removed from the pin holes 64b and 66h of the attachment block 64 and clamp arm 66 to disengage the clamp arm 66 from the attachment block 64. Then, the clamp arm 66 is rotated upward about the pin 68a.

Here, in order to rotate the clamp arm 66 about the pin 68a, the clamping force transmission pin member 68 is rotatably mounted in the clamp arm 66. In order to prevent mutual interference between the attachment block 64 and the clamp arm 66, the attachment block 64 has the sloped part 64d on the front end at the top and the curved part 64e on the rear end at the top. The inner surface of the upright wall 66c of the clamp arm 66 forms a partial cylindrical surface 66ca having the center line coinciding with the pin 68a.

The clamp arm 66 is rotated upward until the bottom end of the upright wall 66c becomes above the attachment block 64. Then, the clamp arm 66 is moved backward to disengage the pin 68a from the pin engagement 64c and removed from the attachment block 64. Then a new clamp arm 66 is mounted on the attachment block 64.

For mounting a new clamp arm 66, the clam arm 66 is moved forward in nearly the same orientation as the removed clamp arm 66 to engage the pin 68a with the pin engagement 64c. Then, the clamp arm 66 is rotated downward about the pin 68a to house the attachment block 64 in the housing recess 66f. Then, the clamp arm 66 is mounted on the attachment block 64 with the pin hole 64b of the attachment block 64 and the pin holes 66h of the clamp arm 66 being aligned. Then, the clamping force transmission pin 67 is inserted in the pin holes 64b and 66h, whereby the positioned clamp arm 66 is coupled to the attachment block 64 in an integrated manner.

According to the swing clamp apparatus 61, for attaching/detaching the clamp arm 66 to/from the attachment block 64, the pin 68a engages/disengages with/from the pin engagement 64c in the direction orthogonal to the axis and orthogonal to the center line of the pin 68a. When the clamp arm 66 is mounted on the attachment block 64, the pins 68a engage with the pin engagements 64c, whereby the positioned clamp arm 66 is coupled to the attachment block 64 in an integrated manner. The clamping force of the clamp rod 63 may be transmitted from the attachment block 64 to the clamp arm 66 via the pin 68a.

The pin 68 is closer to the base end of the clamp arm 66 than the clamping force transmission pin 67 and provided across the forked part 66d of the clamp arm 66. The pin engagement 64c consists of a U-shaped groove 64c notched in the attachment block 64 from the base end. The pin engagement 64c having a simple structure allows the reliable engagement/disengagement of the pin 68a with/from the pin engagement 64c. As for the other features, the same advantages as the swing clamp apparatus 51 can be obtained.

1) In a modification of the second aspect, the clamping force transmission pin member 58 is omitted and a pair of separated pins 58a may be provided to the attachment block 54 in an integrated manner.
2) In a further modification, the clamping force transmission pin member 68 is omitted and a pair of pins protruding from the forked part 66d in the opposite directions to each other may be provided to the clamp arm 66. In such a case, a pair of separated right and left engaging parts 64c consisting of U-shaped grooves 64c formed in the attachment block 64 may be provided in the manner that at least the pins can engage with them.

3) In a further modification, the attachment block 64 has at the rear end a tapered part continued from the U-shaped groove 64c and having a vertical dimension increased toward the rear end.
4) In another modification, the pins 58a or 68a have no abutment surfaces 58b or 68b, having a circular cross-section.

## Claims

1. A swing clamp apparatus (1) comprising a clamp body (2), a clamp rod (3) supported by the clamp body (2) reciprocally in an axial direction thereof and rotatably around an axis thereof, a clamp arm (6) attached to a leading end of the clamp rod (3), and a drive means (8) for reciprocating and rotating the clamp rod (3) to switch the clamp arm (6) between an unclamping position and a clamping position where the clamp arm (6) is retracted in the axial direction and swung about the axis in relation to the unclamping position, **characterized by**:
an attachment block (4) fixed to the leading end of said clamp rod (3) and to which the clamp arm (6) is detachably attached; and
at least one clamping force transmission pin (7) inserted in said attachment block (4) and clamp arm(6) in the direction parallel to the orthogonal direction to the axis for coupling the positioned clamp arm to said attachment block in an integrated manner.

2. The swing clamp apparatus according to claim 1, wherein that said attachment block (4) has a positioner for positioning the clamp arm (6) in the axial direction and in a rotative direction about the axis.

3. The swing clamp apparatus according to claim 1 or 2, wherein said clamp arm (6) is fitted on said attachment block (4).

4. The swing clamp apparatus according to claim 2, wherein said attachment block (4) is formed as a rectangular block and said clamp arm (6) has a rectangular bore in which said attachment block (4) is fitted in.

5. The swing clamp apparatus according to any of claims 1 to 4, wherein said clamp rod (3) has at a leading end a tapered shaft part (3b) having a diameter deceased toward a tip and said attachment block (4) has a tapered axial bore (4a) in which said tapered shaft part (3b) is fitted in.

6. The swing clamp apparatus according to any of claims 1 to 4, wherein said attachment block (14) has an axial bore (14a) in which a leading end of said clamp rod (13) is fitted and a separator continued from said axial bore (14a) and a fastening bolt is provided to fasten and elastically deform said attachment block (14) via said separator, whereby the attachment block (14) is pressed against and secured to the leading end of said clamp rod.

7. The swing clamp apparatus according to claim 1, wherein said clamping force transmission pin is provided to one of said attachment block and clamp arm in a direction parallel to an orthogonal direction to the axis; and said apparatus further comprises:
a pin engagement (56i, 64c) provided to the other of said attachment block and clamp arm and engaging with said pin for coupling the clamp arm mounted to said attachment block in an integrated manner;
and, when said clamp arm is attached/detached to/from said attachment block, said pin engages/disengages with/from said pin engagement in a direction orthogonal to the axis and to the center line of said pin.

8. The swing clamp apparatus according to claim 7, wherein a pin hole is formed through said attachment block (4) and clamp arm in the direction parallel to the center line of said pin and a clamping force transmission pin is inserted in said pin hole.

9. The swing clamp apparatus according to claim 8, wherein said pin and clamping force transmission pin (7) are provided on either side of said clamp rod in a longitudinal direction of said clamp arm.

10. The swing clamp apparatus according to any of claims 7 to 9, wherein a clamping force transmission pin member (58) is inserted in one of said attachment block and clamp arm and said clamping force transmission pin member constitutes said pin.

11. The swing clamp apparatus according to any of claim 7 to 10, wherein said attachment block is formed as a rectangular block, said clamp arm (42) has a forked part (42a) in a base end part, and a part of said clamp arm (42) including said forked part forms a housing recess that is open at a base end and in which said attachment block is fitted.

12. The swing clamp apparatus according to claim 11, wherein pairs of said pins and pin engagements are symmetrically provided in a width direction of said clamp arm (56), said pair of pins is closer to the base end of said clamp arm than said clamping force transmission pin (57) and protrudes from said attachment block in the directions away from each other, and said pair of pin engagements consists of a pair of U-shaped grooves (56) notched in said forked part of said clamp arm from the base end.

13. The swing clamp apparatus according to claim 11, wherein said pin is closer to the base end of said clamp arm (56) than said clamping force transmission pin and provided across said forked part of said clamp arm, and said pin engagement consists of a U-shaped groove (56i) notched in said attachment block from the base end.

14. The swing clamp apparatus according to any of claims 7 to 13, wherein said pin has on the outer periphery abutment surfaces that abut against smooth surfaces parallel to an orthogonal direction to an axis of said pin engagement.

## Patentansprüche

1. Schwenkspannvorrichtung (1), welche umfasst: einen Spannkörper (2), eine Spannstange (3), die von dem Spannkörper (2) in einer axialen Richtung davon reziprok gelagert und um eine Achse davon drehbar ist, einen Spannarm (6), der an einem vorderen Ende der Spannstange (3) befestigt ist, und ein Antriebsmittel (8) zum Hin- und Herbewegen und Drehen der Spannstange (3), um den Spannarm (6) zwischen einer nicht spannenden Stellung und einer spannenden Stellung umzuschalten, wobei der Spannarm (6) in der axialen Richtung eingezogen und in Bezug auf die nicht spannende Stellung um die Achse geschwenkt wird, **gekennzeichnet durch**:
einen Befestigungsblock (4), der an dem vorderen Ende der Spannstange (3) fixiert ist und an dem der Spannarm (6) lösbar befestigt ist; und
mindestens einen Spannkraftübertragungsstift (7), der in dem Befestigungsblock (4) und dem Spannarm (6) in der Richtung parallel zu der orthogonalen Richtung zur Achse zum Koppeln des positionierten Spannarms mit dem Befestigungsblock in integrierter Weise eingesetzt ist.

2. Schwenkspannvorrichtung nach Anspruch 1, wobei der Befestigungsblock (4) eine Positionierungsvorrichtung zum Positionieren des Spannarms (6) in der axialen Richtung und in einer Drehrichtung um die Achse aufweist.

3. Schwenkspannvorrichtung nach Anspruch 1 oder 2, wobei der Spannarm (6) an dem Befestigungsblock (4) angebracht ist.

4. Schwenkspannvorrichtung nach Anspruch 2, wobei der Befestigungsblock (4) als rechteckiger Block ausgebildet ist und der Spannarm (6) eine rechteckige Bohrung aufweist, in die der Befestigungsblock (4) eingesetzt ist.

5. Schwenkspannvorrichtung nach einem der Ansprüche 1 bis 4, wobei die Spannstange (3) an einem vorderen Ende einen zulaufenden Schaftteil (3b) mit einem Durchmesser aufweist, der hin zu einer Spitze abnimmt, und der Befestigungsblock (4) eine zulaufende axiale Bohrung (4a) aufweist, in der der zulaufende Schaftteil (3b) eingesetzt ist.

6. Schwenkspannvorrichtung nach einem der Ansprüche 1 bis 4, wobei der Befestigungsblock (14) eine axiale Bohrung (14a), in der ein vorderes Ende der Spannstange (13) eingesetzt ist, und eine Trennvorrichtung, die sich von der axialen Bohrung (14a) fortsetzt, aufweist und ein Befestigungsbolzen vorgesehen ist, um den Befestigungsblock (14) mittels der Trennvorrichtung zu befestigen und elastisch zu verformen, wodurch der Befestigungsblock (14) gegen das vordere Ende der Spannstange gepresst und an dieser gesichert wird.

7. Schwankspannvorrichtung nach Anspruch 1, wobei der Spannkraftübertragungsstift an einem von Befestigungsblock oder Spannarm in einer Richtung parallel zu einer orthogonalen Richtung zu der Achse vorgesehen ist; und die Vorrichtung weiterhin umfasst:
einen Stifteingriff (56i, 64c), der an dem anderen von Befestigungsblock und
Spannarm vorgesehen ist und mit dem Stift zum Koppeln des Spannarms, der an dem Befestigungsblock montiert ist, in integrierter Weise greift;
und wenn der Spannarm an dem Befestigungsblock befestigt/von diesem gelöst wird, der Stift mit dem Stifteingriff in einer Richtung orthogonal zur Achse und
zur Mittellinie des Stifts greift/sich davon löst.

8. Schwenkspannvorrichtung nach Anspruch 7, wobei durch den Befestigungsblock (4) und den Spannarm in der Richtung parallel zur Mittellinie des Stifts ein Stiftloch ausgebildet ist und ein Spannkraftübertragungsstift in das Stiftloch eingesetzt ist.

9. Schwenkspannvorrichtung nach Anspruch 8, wobei der Stift und der Spannkraftübertragungsstift (7) in einer Längsrichtung des Spannarms an beiden Seiten des Spannstifts vorgesehen sind.

10. Schwenkspannvorrichtung nach einem der Ansprüche 7 bis 9, wobei ein Spannkraftübertragungsstiftelement (58) in eines von Befestigungsblock und Spannarm eingesetzt ist und das Spannkraftübertragungsstiftelement den Stift darstellt.

11. Schwenkspannvorrichtung nach einem der Ansprüche 7 bis 10, wobei der Befestigungsblock als rechteckiger Block ausgebildet ist, der Spannarm (42) in einem unteren Endteil eine gezinkten Teil (42a) aufweist und ein Teil des Spannarms (42), der den gezinkten Teil umfasst, eine Gehäuseaussparung bildet, die an einem unteren Ende offen ist und in der der Befestigungsblock eingesetzt ist.

12. Schwenkspannvorrichtung nach Anspruch 11, wobei Paare der Stifte und Stifteingriffe in einer Breitenrichtung des Spannarms (56) symmetrisch vorgesehen sind, das Paar von Stiften näher zum unteren Ende des Spannarms als der Spannkraftübertragungsstift (57) ist und von dem Befestigungsblock in Richtungen weg voneinander ragt und das Paar von Stifteingriffen aus einem Paar von U-förmigen Nuten (56) besteht, die in dem gezinkten Teil des Spannarms von dem unteren Ende eingekerbt sind.

13. Schwenkspannvorrichtung nach Anspruch 11, wobei der Stift näher zum unteren Ende des Spannarms (56) als der Spannkraftübertragungsstift ist und über dem gezinkten Teil des Spannarms vorgesehen ist und der Stifteingriff aus einer U-förmigen Nut (56i) besteht, die in dem Befestigungsblock von dem unteren Ende eingekerbt ist.

14. Schwenkspannvorrichtung nach einem der Ansprüche 7 bis 13, wobei der Stift an dem Außenumfang Anlageflächen aufweist, die an glatten Flächen parallel zu einer orthogonalen Richtung zu einer Achse des Stifteingriffs anliegen.

## Revendications

1. Dispositif de bride pivotante (1) comprenant un corps de bride (2), une tige de bride (3) supportée par le corps de bride (2) en va-et-vient dans une direction axiale de celui-ci et en rotation autour d'un axe de celui-ci, un bras de bride (6) fixé à une extrémité avant de la tige de bride (3), et un moyen d'entraînement (8) pour faire aller et venir et faire tourner la tige de bride (3) pour changer la position du bras de bride (6) entre une position non serrée et une position serrée dans laquelle le bras de bride (6) est rétracté dans la direction axiale et est incliné autour de l'axe relativement à la position non serrée, **caractérisé par** :
un bloc de fixation (4) fixé à l'extrémité avant de ladite tige de bride (3) et auquel le bras de bride (6) est fixé de manière détachable ; et
au moins une goupille de transmission de force de serrage (7) inséré dans ledit bloc de fixation (4) et ledit bras de bride (6) dans la direction parallèle à la direction orthogonale à l'axe pour accoupler le bras de bride positionné audit bloc de fixation d'une manière intégrée.

2. Dispositif de bride pivotante selon la revendication 1, dans lequel ledit bloc de fixation (4) comporte un positionneur pour positionner le bras de bride (6) dans la direction axiale et dans une direction de rotation autour de l'axe.

3. Dispositif de bride pivotante selon la revendication 1 ou 2, dans lequel ledit bras de bride (6) est monté sur ledit bloc de fixation (4).

4. Dispositif de bride pivotante selon la revendication 2, dans lequel ledit bloc de fixation (4) a la forme d'un bloc rectangulaire et ledit bras de bride (6) comporte un alésage rectangulaire dans lequel est logé ledit bloc de fixation (4).

5. Dispositif de bride pivotante selon l'une quelconque des revendications 1 à 4, dans lequel ladite tige de bride (3) comporte, à une extrémité avant, une partie d'arbre conique (3b) dont le diamètre diminue vers un bout et ledit bloc de fixation (4) comporte un alésage axial conique (4a) dans lequel est logée ladite partie d'arbre conique (3b).

6. Dispositif de bride pivotante selon l'une quelconque des revendications 1 à 4, dans lequel ledit bloc de fixation (14) comporte un alésage axial (14a) dans lequel est logée une extrémité avant de ladite tige de bride (13) et un séparateur dans le prolongement dudit alésage axial (14a) et un boulon de fixation est prévu pour attacher et déformer élastiquement ledit bloc de fixation (14) via ledit séparateur, moyennant quoi le bloc de fixation (14) est pressé contre et fixé à l'extrémité avant de ladite tige de bride.

7. Dispositif de bride pivotante selon la revendication 1, dans lequel ladite goupille de transmission de force de serrage est placée sur un élément parmi ledit bloc de fixation et ledit bras de bride dans une direction parallèle à une direction orthogonale à l'axe, et ledit dispositif comprend en outre :
une partie d'accrochage de goupille (56i, 64c) prévue sur l'autre desdits bloc de fixation et bras de bride et se mettant en prise avec ladite goupille pour accoupler le bras de bride monté sur ledit bloc de fixation d'une manière intégrée ;
et, quand on attache ou détache ledit bras de bride sur ou dudit bloc de fixation, ladite goupille se met en prise ou se dégage de ladite partie d'accrochage de goupille dans une direction orthogonale à l'axe et à l'axe géométrique de ladite goupille.

8. Dispositif de bride pivotante selon la revendication 7, dans lequel un trou de goupille est formé à travers ledit bloc de fixation (4) et ledit bras de bride dans la direction parallèle à l'axe géométrique de ladite goupille et une goupille de transmission de force de serrage est insérée dans ledit trou de goupille.

9. Dispositif de bride pivotante selon la revendication 8, dans lequel ladite goupille et ladite goupille de transmission de force de serrage (7) sont placées de chaque côté de ladite tige de bride dans une direction longitudinale dudit bras de bride.

10. Dispositif de bride pivotante selon l'une quelconque des revendications 7 à 9, dans lequel un élément formant goupille de transmission de force de serrage (58) est inséré dans l'un desdits bloc de fixation et bras de bride et ledit élément formant goupille de transmission de force de serrage constitue ladite goupille.

11. Dispositif de bride pivotante selon l'une quelconque des revendications 7 à 10, dans lequel ledit bloc de fixation a la forme d'un bloc rectangulaire, ledit bras de bride (42) a une partie fourchue (42a) dans une partie d'extrémité de base, et une partie dudit bras de bride (42) comprenant ladite partie fourchue forme un évidement de logement qui est ouvert à une extrémité de base et dans lequel est logé ledit bloc de fixation.

12. Dispositif de bride pivotante selon la revendication 11, dans lequel des paires desdites goupilles et parties d'accrochage de goupille sont prévues de manière symétrique dans une direction de largeur dudit bras de bride (56), ladite paire de goupilles est plus proche de l'extrémité de base dudit bras de bride que ladite goupille de transmission de force de serrage (57) et fait saillie dudit bloc de fixation dans des directions opposées, et ladite paire de parties d'accrochage de goupille consiste en une paire de rainures en forme de U (56) découpées dans ladite partie fourchue du bras de bride depuis l'extrémité de base.

13. Dispositif de bride pivotante selon la revendication 11, dans lequel ladite goupille est plus proche de l'extrémité de base dudit bras de bride (56) que ladite goupille de transmission de force de serrage et est placée en travers de ladite partie fourchue du bras de bride, et ladite partie d'accrochage de goupille consiste en une rainure en forme de U (56i) découpée dans ledit bloc de fixation depuis l'extrémité de base.

14. Dispositif de bride pivotante selon l'une quelconque des revendications 7 à 13, dans lequel ladite goupille comporte sur sa périphérie extérieure des surfaces d'appui qui viennent en appui contre des surfaces lisses parallèles à une direction orthogonale à un axe de ladite partie d'accrochage de goupille.
